# EUROPÄISCHE PATENTSCHRIFT

(11) **EP 1 694 736 B1**
(45) Veröffentlichungstag und Bekanntmachung des Hinweises auf die Patenterteilung: **20.04.2016**
(21) Anmeldenummer: 04803654.5
(22) Anmeldetag: 09.12.2004
(51) Int. Cl.: C08G 18/48, C08G 18/66, C08J 9/32

(54) **SYNTAKTISCHE POLYURETHANE UND DEREN VERWENDUNG ZUR OFF-SHORE-DÄMMUNG**
SYNTACTIC POLYURETHANES AND THEIR UTILIZATION FOR OFF-SHORE INSULATION
POLYURETHANNES SYNTACTIQUES ET LEUR UTILISATION POUR ISOLER DES INSTALLATIONS EN MER

(30) Priorität: 11.12.2003 DE 10358368
(43) Veröffentlichungstag der Anmeldung: 30.08.2006
(73) Patentinhaber: BASF SE, 67056 Ludwigshafen am Rhein (DE)
(72) Erfinder: HUNTEMANN, Peter, 49448 Stemshorn (DE); SCHILLING, Udo, 49356 Diepholz (DE)
(74) Vertreter: BASF IP Association
(86) Internationale Anmeldenummer: PCT/EP2004/013990
(87) Internationale Veröffentlichungsnummer: WO 2005/056629

(56) Entgegenhaltungen:
- EP-A- 1 431 323
- DE-A1- 19 728 792
- US-A- 5 260 343

## Beschreibung

Die Erfindung betrifft syntaktische Polyurethane, erhältlich durch Umsetzung von einer Polyisocyanatkomponente a) mit einer Polyolkomponente, wobei die Polyolkomponente b) ein Polyetherpolyol auf Basis eines difunktionellen Startermoleküls b1), ein Polyetherpolyol auf Basis eines trifunktionellen Startermoleküls b2) und ein Kettenverlängerungsmittel b3) umfasst, in Gegenwart von Mikrohohlkugeln c), wobei der Polyolbestandteil b2) die Bestandteile b2-1) ein Polyetherpolyol auf Basis eines trifunktionellen Startermoleküls mit einem mittleren Molekulargewicht von 400 g/mol bis 3500 g/mol und b2-2) ein Polyetherpolyol auf Basis eines trifunktionellen Startermoleküls mit einem mittleren Molekulargewicht von mehr als 3500 g/mol bis 8000 g/mol, umfasst. Ferner betrifft die Erfindung die Verwendung der syntaktischen Polyurethane zur Dämmung von Off-Shore-Rohren sowie gedämmte Off-Shore-Rohre als solches, sowie andere im Off-Shore-Bereich eingesetzter Teile und Geräte.

Der Begriff syntaktische Kunststoffe umfasst im allgemeinen Kunststoffe, die Hohlfüllstoffe enthalten. Syntaktische Kunststoffe finden üblicherweise Verwendung als thermische Isolierbeschichtungen, aufgrund ihrer vorteilhaften Druckfestigkeit und Temperaturbeständigkeit bevorzugt im Off-Shore Bereich. Ebenfalls sind Anwendungen als Brandschutzmaterial und als Schallisolationsmaterial bekannt.

WO 87/1070 beschreibt ein Wärmeisolationsmaterial, bestehend aus elastomeren Kunststoff, wie beispielsweise Kautschuk oder Styrolbutadlen, als Matrix und Mikrohohlglaskugeln, wobei die Mikrohohlglaskugeln in einer Menge von 40 - 80 Vol.-% eingearbeitet werden.

WO 99/3922, WO 02/72701 und EP-A-896 976 beschreiben syntaktische Polyurethane, die aus Polyurethan und Mikrohohlglaskugeln bestehen und bevorzugt als Isolierbeschichtung für Rohre im Off-Shore Bereich eingesetzt werden. Die Herstellung erfolgt durch Zugabe der Mikrohohlkugeln zu einer der Polyurethansystemkomponenten und anschließender Vermischung der Systemkomponenten.

Um gute Dämmeigenschaften eines Schaumsystems zu erhalten, ist es vorteilhaft, möglichst viele Mikrohohlkugeln in das System einzuarbeiten. Problematisch ist, dass hohe Füllstoffanteile zu Systemkomponenten mit hohen Viskositäten führen, die häufig thixotrop und unter Umständen nicht pumpfähig und schlecht vermischbar sind. Verstärkt wird diese Problematik dadurch, dass im Anwendungsbereich der Polyurethane üblicherweise der gesamte Füllstoffanteil in die Polyolkomponente gegeben werden muss, da die Glashohlkugeln im allgemeinen nicht mit dem Isocyanat verträglich sind, weil durch den Wassergehalt und/oder den Alkalianteil an der Oberfläche von Glas eine Beeinträchtigung der Qualität des Isocyanats erfolgt.

Aufgabe der Erfindung war es, eine Rezeptur für die Herstellung von syntaktischen Polyurethanen bereit zu stellen, die einerseits eine hohe Beladung von Mikrohohlfüllstoffen ermöglicht und somit zu einer niedrigen Gesamtdichte führt, und andererseits die zur Off-Shore-Dämmung benötigten Eigenschaften, wie beispielsweise gute Dehnbarkeit und eine Erweichungstemperatur von mehr als 150°C gewährleistet. Des weiteren sollte auch ein hohes Maß an Verarbeitungssicherheit erreicht werden.

Die Erfindung konnte gelöst werden, indem ein syntaktisches Polyurethan durch Umsetzung von handelsüblichen Polyisocyanaten mit einer speziellen Polyolrezeptur hergestellt wurde.

Gegenstand der Erfindung ist daher ein syntaktisches Polyurethan, erhältlich durch Umsetzung von
a) einer Polyisocyanatkomponente mit
b) einer Polyolkomponente, wobei die Polyolkomponente b) die Bestandteile
   b1) ein Polyetherpolyol auf Basis eines difunktionellen Startermoleküls,
   b2) ein Polyetherpolyol auf Basis eines trifunktionellen Startermoleküls und
   b3) ein Kettenverlängerungsmittel
   umfasst, in Gegenwart von
c) Mikrohohlkugeln,
wobei der Polyolbestandteil b2) die Bestandteile
b2-1) ein Polyetherpolyol auf Basis eines trifunktionellen Startermoleküls mit einem mittleren Molekulargewicht von 400 g/mol bis 3500 g/mol und
b2-2) ein Polyetherpolyol auf Basis eines trifunktionellen Startermoleküls mit einem mittleren Molekulargewicht von mehr als 3500 g/mol bis 8000 g/mol
umfasst.

Unter dem Begriff Mikrohohlkugel c) sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Die mineralischen Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweises weisen die organischen oder mineralischen Hohlkugeln einen Durchmesser von 1 bis 1000 µm, bevorzugt von 5 bis 200 µm auf. Üblicherweises weisen die organischen oder mineralischen Hohlkugeln eine Schüttdichte von 0,1 bis 0,4 g/cm³ auf. Sie besitzen im allgemeinen eine Wärmeleitfähigkeit von 0,03 bis 0,12 W/mK.

Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite^{®} Glass Bubbles verwendet werden.

Die Mikrohohlkugeln werden im allgemeinen in einer Menge von 1 bis 80 Gew.-%, bevorzugt von 2 bis 50, mehr bevorzugt von 5 bis 35 Gew.-% und besonders bevorzugt von 10 bis 30 Gew.-%, bezogen auf das Gesamtgewicht des resultierenden syntaktischen Polyurethans, zugegeben.

Für die Komponenten a) und b) gilt folgendes:

Die verwendeten Polyisocyanate a) umfassen die üblichen aliphatischen, cycloaliphatischen und insbesondere aromatischen Di- und/oder Polyisocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die in der Polyolkomponente b) verwendeten Polyetherpolyole werden nach literaturbekannten Verfahren, beispielsweise durch anionische Polymerisation mit Alkalihydroxiden oder Alkalialkoholaten als Katalysatoren oder mit Hilfe von Doppelmetallcyanidkatalysatoren und unter Zusatz mindestens eines Startermoleküls, reaktive Wasserstoffatome gebunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, Ethylenoxid und 1,2-Propylenoxid. Die Alkylenoxide können einzeln, alternierend nacheinander oder als Mischungen verwendet werden.

Bevorzugt werden Mischungen aus 1,2-Propylenoxid und Ethylenoxid, wobei insbesondere das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. In einer weiteren besonders bevorzugten Ausführungsform wird als Alkylenoxid nur 1,2-Propylenoxid verwendet.

Als Startermolekül kommen bevorzugt Alkohole, Amine oder Alkanolamine in Betracht.

Es ist erfindungswesentlich, dass die Polyolkomponente b) die Bestandteile
b1) ein Polyetherpolyol auf Basis eines difunktionellen Startermoleküls,
b2) ein Polyetherpolyol auf Basis eines trifunktionellen Startermoleküls und
b3) ein Kettenverlängerungsmittel
umfasst.

Als difunktionelle Startermoleküle zu Herstellung des Bestandteils b1) kann beispielsweise Ethandiol, Propandiol-1,2 und -1,3, Diethylenglykol, Dipropylenglykol, Butandiol-1,4 oder Hexandiol-1,6 oder Gemische davon verwendet werden. Bevorzugt wird Diethylenglykol oder Dipropylenglykol verwendet.

Im allgemeinen wird die Alkoxylierung des Bestandteils b1) derart ausgeführt, dass der Bestandteil b1) ein zahlenmittleres Molekulargewicht von 400 g/mol bis 3500 g/mol, bevorzugt von 600 bis 2500 g/mol, besonders bevorzugt von 800 bis 1500 g/mol aufweist.

Als trifunktionelle Startermoleküle zu Herstellung des Bestandteils b2) werden bevorzugt Glycerin, Trimethylolpropan oder Gemische davon verwendet.

Im allgemeinen wird die Alkoxylierung des Bestandteils b2) derart ausgeführt, dass der Bestandteil b2) ein zahlenmittleres Molekulargewicht von 400 g/mol bis 8000 g/mol aufweist.

Weiter ist es erfindungswesentlich, dass der Polyolbestandteil b2) die Bestandteile b2-1) und b2-2), wobei es sich jeweils um ein Polyetherpolyol auf Basis eines trifunktionellen Startermoleküls handelt, jedoch mit unterschiedlichen Molekulargewicht.

Der Bestandteil b2-1) umfasst ein Polyetherpolyol auf Basis eines trifunktionellen Startermoleküls mit einem zahlenmittleren Molekulargewicht von 400 g/mol bis 3500 g/mol, bevorzugt von 1000 bis 3200 g/mol, besonders bevorzugt von 1500 bis 3000 g/mol, insbesondere von 1800 bis 2900 g/mol.

Der Bestandteil b2-2) umfasst ein Polyetherpolyol auf Basis eines trifunktionellen Startermoleküls mit einem zahlenmittleren Molekulargewicht von mehr als 3500 g/mol bis 8000 g/mol, bevorzugt von 3700 bis 7000 g/mol, besonders bevorzugt von 4000 g/mol bis 6000 g/mol.

Die Polyolkomponente b) enthält ferner als Bestandteil b3) ein Kettenverlängerungsmittel. Unter Kettenverlängerungsmittel versteht man im allgemeinen verzweigte oder unverzweigte Alkohole oder Amine, bevorzugt 2-wertige Alkohole, mit einem Molekulargewicht von weniger als 400 g/mol, bevorzugt weniger als 300 g/mol, insbesondere von 60 bis 250 g/mol. Beispiele hierfür sind Ethylenglykol, 1,4-Butandiol, 1,3-Propandiol, Diethylenglykol oder Dipropylenglykol. Bevorzugt verwendet wird Dipropylenglykol.

In einer bevorzugten Ausführungsform enthält die Polyolkomponente b) als zusätzlichen Bestandteil b4) ein Polyetherpolyol auf Basis eines vier- oder höherfunktionellen Startermoleküls. Bevorzugt verwendet werden 4- bis 6-funktionelle Startermoleküle. Beispiele für geeignete Startermoleküle sind Pentaerythrit, Sorbitol und Saccharose.

In einer bevorzugten Ausführungsform werden die einzelnen Bestandteile der Polyolkomponente b) (d.h. die Bestandteile b1), b2), gegebenenfalls in Form von b2-1) und b2-2), b3) und gegebenenfalls b4)) so gewählt, dass die Polyolkomponente b) eine Viskosität von weniger als 500 mPas bei 25°C, bevorzugt von 200 bis 400 mPas bei 25°C, gemessen nach DIN 53019, aufweist.

Im allgemeinen werden die einzelnen Bestandteile der Polyolkomponente b) in folgenden Mengen, jeweils bezogen auf das Gesamtgewicht der Komponente b), eingesetzt:
b1) in einer Menge von 20 bis 60 Gew.-%, bevorzugt von 30 bis 50 Gew.-%,
b2) in einer Menge von 20 bis 60 Gew.-%, bevorzugt von 30 bis 50 Gew.-% und
b3) in einer Menge von 5 bis 25 Gew.-%, bevorzugt von 7 bis 20 Gew.-%, besonders bevorzugt von 9 bis 18 Gew.-%.

Da Bestandteil b2) in die Bestandteile b2-1) und b2-2) aufgeteilt ist, werden diese im allgemeinen in folgenden Mengen, jeweils bezogen auf das Gesamtgewicht der Komponente b), eingesetzt:
b1) in einer Menge von 5 bis 40 Gew.-%, bevorzugt von 10 bis 30 Ges.-%, besonders bevorzugt von 15 bis 25 Gew.-%,
b2) in einer Menge von 5 bis 40 Gew.-%, bevorzugt von 10 bis 30 Gew.-%, besonders bevorzugt von 15 bis 25 Gew.-%.

Sofern Bestandteil b4) verwendet wird, beträgt im allgemeinen die eingesetzte Menge 0,1 bis 15 Gew.-%, bevorzugt 1 bis 10 Gew.-%, besonders bevorzugt 2 bis 7 Gew.-%.

Gegebenenfalls können der Polyolkomponente noch Zusatzstoffe zugesetzt werden. Hier seien beispielsweise genannt Katalysatoren (Verbindungen, welche die Reaktion der Isocyanatkomponente mit der Polyolkomponente beschleunigen), oberflächenaktive Substanzen, Farbstoffe, Pigmente, Hydrolyseschutzstabilisatoren , Oxidationsschutzmittel sowie UV-Schutzmittel.

Des weiteren kann die Polyolkomponente thixotropierende Additive, wie beispielsweise Laromin^{®} C 260 (Di-methyl-methylen-Bis-Cyclohexylamin) enthalten. Im allgemeinen liegt die eingesetzte Menge dieser Additive zwischen 0,1 und 3 Gewichtsteilen, bezogen auf 100 Gewichtsteile der Polyol-Komponente.

Ferner ist es möglich, der Polyolkomponente b) die aus dem Stand der Technik bekannten Treibmittel zuzusetzen. Es ist jedoch bevorzugt, dass die Isocyanatkomponente und die Polyolkomponente kein physikalisches und kein chemisches Treibmittel enthält. Ferner ist bevorzugt, dass diesen Komponenten kein Wasser zugesetzt wird. Somit enthalten die Komponenten a) und b) besonders bevorzugt kein Treibmittel, abgesehen von Restwasser, welches in technisch hergestellten Polyolen enthalten ist.

Ferner ist es besonders bevorzugt, wenn der Restwassergehalt durch Zusatz von Wasserfängern reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente b), eingesetzt.

Neben den erfindungsgemäßen syntaktischen Polyurethanen ist ferner Gegenstand der Erfindung ein Verfahren zur Herstellung von syntaktischen Polyurethanen durch Umsetzung von
a) einer Polyisocyanatkomponente mit
b) einer Polyolkomponente, wobei die Polyolkomponente b) die Bestandteile
   b1) ein Polyetherpolyol auf Basis eines difunktionellen Startermoleküls,
   b2) ein Polyetherpolyol auf Basis eines trifunktionellen Startermoleküls und
   b3) ein Kettenverlängerungsmittel umfasst, in Gegenwart von
c) Mikrohohlkugeln,
wobei der Polyolbestandteil b2) die Bestandteile
b2-1) ein Polyetherpolyol auf Basis eines trifunktionellen Startermloleküls mit einem mittleren Molekulargewicht von 400 g/mol bis 3500 g/mol und
b2-2) ein Polyetherpolyol auf Basis eines trifunktionellen Startermoleküls mit einem mittleren Molekulargewicht von mehr als 3500 g/mol bis 8000 g/mol,
umfasst.

Für die verwendeten Komponenten a) bis c) wird hier auf vorstehende Ausführungen verwiesen. Ebenso gilt dies für die vorstehend beschriebenen Zusatzstoffe.

Zur Herstellung der Polyurethane werden die Polyisocyanate a) Polyolkomponente b) in solchen Mengen zur Umsetzung gebracht, dass das Äquivalenzverhältnis von NCO-Gruppen der Polyisocyanate a) zur Summe der reaktiven Wasserstoffatome der Komponente b) 1 : 0,5 bis 1 : 3,50 (entsprechend einem Isocyanatindex von 50 bis 350), vorzugsweise 1 : 0,85 bis 1 : 1,30 und besonders bevorzugt von 1 : 0,9 bis 1 : 1,15 beträgt.

Die Ausgangskomponenten werden üblicherweise bei einer Temperatur von 0°C bis 100°C, bevorzugt 15 bis 60 °C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen.

Die Einarbeitung der Mikrohohlkugeln c) in die PUR-Komponenten erfolgt nach aus dem Stand der Technik bekannten Methoden. Es ist möglich, die Mikrohohlkugeln vor der Umsetzung mindestens einer der Komponenten a) oder b) zuzugeben und/oder die Mikrohohlkugeln unmittelbar nach Umsetzung der Komponenten a) und b) dem noch reagierenden Umsetzungsgemisch zuzugeben. Beispiele für geeignete Vermischungsverfahren sind in WO 94/20286, WO 021102887 und WO 02/072701 beschrieben. Bevorzugt wird nach der Mischtopfmethode gemäß WO 02/102887 verfahren.

Weiterhin ist Gegenstand der Erfindung die Verwendung von syntaktischen Polyurethanen, erhältlich durch Umsetzung von
a) einer Polyisocyanatkomponente mit
b) einer Polyolkomponente, wobei die Polyolkomponente b) die Bestandteile
   b1) ein Polyetherpolyol auf Basis eines difunktionellen Startermoleküls,
   b2) ein Polyetherpolyol auf Basis eines trifunktionellen Startermoleküls und
   b3) ein Kettenverlängerungsmittel
   umfasst, in Gegenwart von
c) Mikrohohlkugeln, wobei der Polyolbestandteil b2) die Bestandteile
   b2-1) ein Polyetherpolyol auf Basis eines trifunktionellen Startermoleküls mit einem mittleren Molekulargewicht von 400 g/mol bis 3500 g/mol und
   b2-2) ein Polyetherpolyol auf Basis eines trifunktionellen Startermoleküls mit einem mittleren Molekulargewicht von mehr als 3500 g/mol bis 8000 g/mol
   umfasst
   zur Dämmung von Off-Shore-Rohren oder zur Herstellung von Muffen für Off-Shore-Rohre, sowie zur Herstellung oder Beschichtung anderer Teile und Geräte im Bereich Off-Shore. Beispiele für andere Teile und Geräte im Bereich Off-Shore sind Bohrlochanschlüssen, Rohrsammler, Pumpen und Bojen.

Unter Off-Shore Rohr wird im Rahmen dieser Erfindung ein Rohr verstanden, welches zur Förderung von Öl und Gas dient. Das Öl/ Gas strömt im allgemeinen hierin vom Meeresboden auf Plattformen, in Schiffe/ Tanker oder auch direkt an Land.

Unter Muffen sind die Verbindungen von zwei Rohren oder Rohrteilen zu verstehen.

Gegenstand der Erfindung ist somit ein Off-Shore-Rohr, aufgebaut aus
(i) einem innerem Rohr daran haftend angebracht
(ii) eine Schicht aus syntaktischen Polyurethanen, erhältlich durch Umsetzung von
   a) einer Polyisocyanatkomponente mit
   b) einer Polyolkomponente, wobei die Polyolkomponente b) die Bestandteile
      b1) ein Polyetherpolyol auf Basis eines difunktionellen Startermoleküls,
      b2) ein Polyetherpolyol auf Basis eines trifunktionellen Startermoleküls und
      b3) ein Kettenverlängerungsmittel
      umfasst, in Gegenwart von
   c) Mikrohohlkugeln, wobei der Polyolbestandteil b2) die Bestandteile
      b2-1) ein Polyetherpolyol auf Basis eines trifunktionellen Startermoleküls mit einem mittleren Molekulargewicht von 400 g/mol bis 3500 g/mol und
      b2-2) ein Polyetherpolyol auf Basis eines trifunktionellen Startermoleküls mit einem mittleren Molekulargewicht von mehr als 3500 g/mol bis 8000 g/mol
      umfasst.

In einer bevorzugten Ausführungsform weist die Schicht aus erfindungsgemäßen syntaktischen Polyurethan eine Dicke von 5 bis 200 mm, bevorzugt 10 bis 170 mm, besonders bevorzugt 15 bis 150 mm auf.

Es ist weiterhin möglich, dass auf der Schicht aus erfindungsgemäßen Polyurethan eine weitere Schicht, z.B. eine Deckschicht aus einem Thermoplasten, angebracht ist. Bevorzugt ist jedoch, dass bei den erfindungsgemäßen Off-Shore-Rohre auf der Schicht (ii) aus syntaktischem Polyurethan keine weitere Schicht mehr angebracht ist.

Schließlich ist Gegenstand der Erfindung ein Verfahren (auch als Rotationsgießverfahren bezeichnet) zur Herstellung von erfindungsgemäßen Off-Shore-Rohren, umfassend die Schritte
1) Bereitstellen eines inneren Rohres, das mit syntaktischem Polyurethan beschichtet werden soll,
2) Rotieren des zu beschichteten Rohres in axialer Richtung,
3) Aufbringen eines nicht ausreagierten Reaktionsgemisches zur Herstellung der Schicht aus syntaktischen Polyurethan, enthaltend die Komponenten a), b) und c), auf das rotierende Rohr.

Im allgemeinen erfolgt in Schritt 3) das Aufbringen des Reaktionsgemisches durch Aufgießen auf das sich drehende Rohr. Bei dem Reaktionsgemisch handelt es sich um ein Polyurethangemisch, das durch Vermischen der Komponenten a), b) und c) mittels herkömmlicher Mischvorrichtungen, z.B. Niederdruckmischkopf, erhalten wurde. Der Vorschub des Mischkopfs oder des Rohres wird im allgemeinen so eingestellt, dass bei konstantem Ausstoß die gewünschte Dicke der syntaktischen Polyurethanschicht erreicht wird.

## Patentansprüche

1. Syntaktisches Polyurethan,
erhältlich durch Umsetzung von
a) einer Polyisocyanatkomponente mit
b) einer Polyolkomponente, wobei die Polyolkomponente b) die Bestandteile
b1) ein Polyetherpolyol auf Basis eines difunktionellen Startermoleküls,
b2) ein Polyetherpolyol auf Basis eines trifunktionellen Startermoleküls und
b3) ein Kettenverlängerungsmittel
umfasst, in Gegenwart von
c) Mikrohohlkugeln, wobei der Polyolbestandteil b2) die Bestandteile
b2-1) ein Polyetherpolyol auf Basis eines trifunktionellen Startermoleküls mit einem mittleren Molekulargewicht von 400 g/mol bis 3500 g/mol und
b2-2) ein Polyetherpolyol auf Basis eines trifunktionellen Startermoleküls mit einem mittleren Molekulargewicht von mehr als 3500 g/mol bis 8000 g/mol
umfasst.

2. Syntaktisches Polyurethan nach Anspruch 1, **dadurch gekennzeichnet, dass** die Polyolkomponente b) zusätzlich einen Bestandteil
b4) ein Polyetherpolyol auf Basis eines vier- oder höherfunktionellen Startermoleküls
enthält.

3. Syntaktisches Polyurethan nach einem der Ansprüche 1 oder 2, **dadurch gekennzeichnet, dass** die einzelnen Bestandteile der Polyolkomponente b) so gewählt werden, dass die Polyolkomponente b) eine Viskosität von weniger als 500 mPas bei 25°C, gemessen nach DIN 53019, aufweist.

4. Syntaktisches Polyurethan nach einem der Ansprüche 1 bis 3, **dadurch gekennzeichnet, dass** die Komponenten
b1) in einer Menge von 20 bis 60 Gew.-%,
b2) in einer Menge von 20 bis 60 Gew.-% und
b3) in einer Menge von 5 bis 25 Gew.-%,
bezogen auf das Gesamtgewicht der Polyolkomponente b), vorhanden sind.

5. Verfahren zur Herstellung von syntaktischen Polyurethanen durch Umsetzung von
a) einer Polyisocyanatkomponente mit
b) einer Polyolkomponente, wobei die Polyolkomponente b) die Bestandteile
b1) ein Polyetherpolyol auf Basis eines difunktionellen Startermoleküls,
b2) ein Polyetherpolyol auf Basis eines trifunktionellen Startermoleküls und
b3) ein Kettenverlängerungsmittel
umfasst, in Gegenwart von
c) Mikrohohlkugeln wobei der Polyolbestandteil b2) die Bestandteile
b2-1) ein Polyetherpolyol auf Basis eines trifunktionellen Startermoleküls mit einem mittleren Molekulargewicht von 400 g/mol bis 3500 g/mol und
b2-2) ein Polyetherpolyol auf Basis eines trifunktionellen Startermoleküls mit einem mittleren Molekulargewicht von mehr als 3500 g/mol bis 8000 g/mol
umfasst.

6. Verwendung von syntaktischen Polyurethanen erhältlich durch Umsetzung von
a) einer Polyisocyanatkomponente mit
b) einer Polyolkomponente, wobei die Polyolkomponente b) die Bestandteile
b1) ein Polyetherpolyol auf Basis eines difunktionellen Startermoleküls,
b2) ein Polyetherpolyol auf Basis eines trifunktionellen Startermoleküls und
b3) ein Kettenverlängerungsmittel
umfasst, in Gegenwart von
c) Mikrohohlkugeln zur Dämmung von Off-Shore-Rohren, wobei der Polyolbestandteil b2) die Bestandteile
b2-1) ein Polyetherpolyol auf Basis eines trifunktionellen Startermoleküls mit einem mittleren Molekulargewicht von 400 g/mol bis 3500 g/mol und
b2-2) ein Polyetherpolyol auf Basis eines trifunktionellen Startermoleküls mit einem mittleren Molekulargewicht von mehr als 3500 g/mol bis 8000 g/mol
umfasst.

7. Off-Shore-Rohr, aufgebaut aus
(i) einem innerem Rohr, daran haftend angebracht
(ii) eine Schicht aus syntaktischen Polyurethanen, erhältlich durch Umsetzung von
a) einer Polyisocyanatkomponente mit
b) einer Polyolkomponente, wobei die Polyolkomponente b) die Bestandteile
b1) ein Polyetherpolyol auf Basis eines difunktionellen Startermoleküls,
b2) ein Polyetherpolyol auf Basis eines trifunktionellen Startermoleküls und
b3) ein Kettenverlängerungsmittel
umfasst, in Gegenwart von
c) Mikrohohlkugeln, wobei der Polyolbestandteil b2) die Bestandteile
b2-1) ein Polyetherpolyol auf Basis eines trifunktionellen Startermoleküls mit einem mittleren Molekulargewicht von 400 g/mol bis 3500 g/mol und
b2-2) ein Polyetherpolyol auf Basis eines trifunktionellen Startermoleküls mit einem mittleren Molekulargewicht von mehr als 3500 g/mol bis 8000 g/mol
umfasst.

8. Off-Shore-Rohr nach Anspruch 7, **dadurch gekennzeichnet, dass** die Schicht (ii) aus syntaktischen Polyurethan eine Dicke von 5 bis 200 mm aufweist.

9. Verfahren zur Herstellung von Off-Shore-Rohren nach Anspruch 7 oder 8, umfassend die Schritte
1) Bereitstellen eines inneren Rohres, das mit syntaktischen Polyurethan beschlchtet werden soll,
2) Rotieren des zu beschichteten Rohres
3) Aufbringen eines nicht ausreagierten Reaktionsgemisches zur Herstellung der Schicht aus syntaktischen Polyurethan, enthaltend die Komponenten a), b) und c), auf das rotierende Rohr.

## Claims

1. A syntactic polyurethane obtainable by reacting
a) a polyisocyanate component with
b) a polyol component, the polyol component b) comprising the constituents
b1) a polyetherpolyol based on a difunctional initiator molecule,
b2) a polyetherpolyol based on a trifunctional initiator molecule and
b3) a chain extender,
in the presence of
c) hollow microspheres, the polyol constituent b2) comprising the constituents
b2-1) a polyetherpolyol based on a trifunctional initiator molecule having an average molecular weight of from 400 to 3500 g/mol and
b2-2) a polyetherpolyol based on a trifunctional initiator molecule having an average molecular weight of from more than 3500 to 8000 g/mol.

2. The syntactic polyurethane according to claim 1, wherein the polyol component b) additionally comprises a constitutent
b4) a polyetherpolyol based on an initiator molecule which is tetrafunctional or has a higher functionality.

3. The syntactic polyurethane according to either of claims 1 and 2, wherein the individual constituents of the polyol component b) are selected so that the polyol component b) has a viscosity at 25°C of less than 500 mPa.s, measured according to DIN 53019.

4. The syntactic polyurethane according to any of claims 1 to 3, wherein the component
b1) is present in an amount of from 20 to 60% by weight, the component
b2) is present in an amount of from 20 to 60% by weight, and the component
b3) is present in an amount of from 5 to 25% by weight,
based on the total weight of the polyol component b).

5. A process for the preparation of syntactic polyurethanes by reacting
a) a polyisocyanate component with
b) a polyol component, the polyol component b) comprising the constituents
b1) a polyetherpolyol based on a difunctional initiator molecule,
b2) a polyetherpolyol based on a trifunctional initiator molecule and
b3) a chain extender,
in the presence of
c) hollow microspheres, the polyol constituent b2) comprising the constituents
b2-1) a polyetherpolyol based on a trifunctional initiator molecule having an average molecular weight of from 400 to 3500 g/mol and
b2-2) a polyetherpolyol based on a trifunctional initiator molecule having an average molecular weight of from more than 3500 to 8000 g/mol.

6. The use of a syntactic polyurethane obtainable by reacting
a) a polyisocyanate component with
b) a polyol component, the polyol component b) comprising the constituents
b1) a polyetherpolyol based on a difunctional initiator molecule,
b2) a polyetherpolyol based on a trifunctional initiator molecule and
b3) a chain extender,
in the presence of.
c) hollow microspheres for insulating offshore pipes, the polyol constituent b2) comprising the constituents
b2-1) a polyetherpolyol based on a trifunctional initiator molecule having an average molecular weight of from 400 to 3500 g/mol and
b2-2) a polyetherpolyol based on a trifunctional initiator molecule having an average molecular weight of from more than 3500 to 8000 g/mol.

7. An offshore pipe composed of
(i) an inner pipe and, adhesively applied thereto,
(ii) a layer of a syntactic polyurethane o btainable by reacting
a) a polyisocyanate component with
b) a polyol component, the polyol component b) comprising the constituents
b1) a polyetherpolyol based on a difunctional initiator molecule,
b2) a polyetherpolyol based on a trifunctional initiator molecule and
b3) a chain extender,
in the presence of
c) hollow microspheres, the polyol constituent b2) comprising the constituents
b2-1) a polyetherpolyol based on a trifunctional initiator molecule having an average molecular weight of from 400 to 3500 g/mol and
b2-2) a polyetherpolyol based on a trifunctional initiator molecule having an average molecular weight of from more than 3500 to 8000 g/mol.

8. The offshore pipe according to claim 7, wherein the layer (ii) of syntactic polyurethane has a thickness of from 5 to 200 mm.

9. A process for the production of offshore pipes according to claim 7 or 8, comprising the steps
1) provision of an inner pipe which is to be coated with syntactic polyurethane,
2) rotation of the pipe to be coated and
3) application of an unreacted reaction mixture for the production of the layer of syntactic polyurethane, comprising the components a), b) and c), to the rotating pipe.

## Revendications

1. Polyuréthane syntactique, pouvant être obtenu par mise en réaction de
a) un composant polyisocyanate avec
b) un composant polyol, le composant polyol b) comprenant les constituants
b1) un polyétherpolyol à base d'une molécule de départ bifonctionnelle,
b2) un polyétherpolyol à base d'une molécule de départ trifonctionnelle et
b3) un agent d'allongement de chaînes,
en présence de
c) des microbilles creuses, le constituant polyol b2) comprenant les constituants
b2-1) un polyétherpolyol à base d'une molécule de départ trifonctionnelle d'un poids moléculaire moyen de 400 g/mol à 3 500 g/mol, et
b2-2) un polyétherpolyol à base d'une molécule de départ trifonctionnelle d'un poids moléculaire moyen de plus de 3 500 g/mol à 8 000 g/mol.

2. Polyuréthane syntactique selon la revendication 1, **caractérisé en ce que** le composant polyol b) contient en outre un constituant
b4) un polyétherpolyol à base d'une molécule de départ tétrafonctionnelle ou d'une fonctionnalité supérieure.

3. Polyuréthane syntactique selon l'une quelconque des revendications 1 ou 2, **caractérisé en ce que** les constituants individuels du composant polyol b) sont choisis de sorte que le composant polyol b) présente une viscosité de moins de 500 mPas à 25 °C, mesurée selon DIN 53019.

4. Polyuréthane syntactique selon l'une quelconque des revendications 1 à 3, **caractérisé en ce que** les composants sont présents
b1) en une quantité de 20 à 60 % en poids,
b2) en une quantité de 20 à 60 % en poids et
b3) en une quantité de 5 à 25 % en poids,
par rapport au poids total du composant polyol b).

5. Procédé de fabrication de polyuréthanes syntactiques par mise en réaction de
a) un composant polyisocyanate avec
b) un composant polyol, le composant polyol b) comprenant les constituants
b1) un polyétherpolyol à base d'une molécule de départ bifonctionnelle,
b2) un polyétherpolyol à base d'une molécule de départ trifonctionnelle et
b3) un agent d'allongement de chaînes,
en présence de
c) des microbilles creuses, le constituant polyol b2) comprenant les constituants
b2-1) un polyétherpolyol à base d'une molécule de départ trifonctionnelle d'un poids moléculaire moyen de 400 g/mol à 3 500 g/mol, et
b2-2) un polyétherpolyol à base d'une molécule de départ trifonctionnelle d'un poids moléculaire moyen de plus de 3 500 g/mol à 8 000 g/mol.

6. Utilisation de polyuréthanes syntactiques pouvant être obtenus par mise en réaction de
a) un composant polyisocyanate avec
b) un composant polyol, le composant polyol b) comprenant les constituants
b1) un polyétherpolyol à base d'une molécule de départ bifonctionnelle,
b2) un polyétherpolyol à base d'une molécule de départ trifonctionnelle et
b3) un agent d'allongement de chaînes,
en présence de
c) des microbilles creuses, pour l'isolation de tubes off-shore, le constituant polyol b2) comprenant les constituants
b2-1) un polyétherpolyol à base d'une molécule de départ trifonctionnelle d'un poids moléculaire moyen de 400 g/mol à 3 500 g/mol, et
b2-2) un polyétherpolyol à base d'une molécule de départ trifonctionnelle d'un poids moléculaire moyen de plus de 3 500 g/mol à 8 000 g/mol.

7. Tube off-shore, formé par
(i) un tube intérieur, sur lequel est appliquée par adhésion
(ii) une couche en polyuréthanes syntactiques, pouvant être obtenue par mise en réaction de
a) un composant polyisocyanate avec
b) un composant polyol, le composant polyol b) comprenant les constituants
b1) un polyétherpolyol à base d'une molécule de départ bifonctionnelle,
b2) un polyétherpolyol à base d'une molécule de départ trifonctionnelle et
b3) un agent d'allongement de chaînes,
en présence de
c) des microbilles creuses, le constituant polyol b2) comprenant les constituants
b2-1) un polyétherpolyol à base d'une molécule de départ trifonctionnelle d'un poids moléculaire moyen de 400 g/mol à 3 500 g/mol, et
b2-2) un polyétherpolyol à base d'une molécule de départ trifonctionnelle d'un poids moléculaire moyen de plus de 3 500 g/mol à 8 000 g/mol.

8. Tube off-shore selon la revendication 7, **caractérisé en ce que** la couche (ii) en polyuréthane syntactique présente une épaisseur de 5 à 200 mm.

9. Procédé de fabrication de tubes off-shore selon la revendication 7 ou 8, comprenant les étapes suivantes :
1) la préparation d'un tube intérieur, qui doit être revêtu avec un polyuréthane syntactique,
2) la rotation du tube à revêtir,
3) l'application d'un mélange réactionnel non réagi pour la fabrication de la couche de polyuréthane syntactique, contenant les composants a), b) et c), sur le tube en rotation.
